# EUROPÄISCHE PATENTSCHRIFT

(11) **EP 2 317 839 B1**
(45) Veröffentlichungstag und Bekanntmachung des Hinweises auf die Patenterteilung: **02.08.2017**
(21) Anmeldenummer: 09780562.6
(22) Anmeldetag: 14.07.2009
(51) Int. Cl.: A01K 27/00

(54) **TIERFÜHREINRICHTUNG**
ANIMAL GUIDE
DISPOSITIF DE DRESSAGE D'ANIMAL

(30) Priorität: 23.07.2008 DE 102008034381; 02.09.2008 US 93528 P; 10.03.2009 DE 102009011926
(43) Veröffentlichungstag der Anmeldung: 11.05.2011
(73) Patentinhaber: Warkentin, Waldemar, 32549 Bad Oeynhausen (DE)
(72) Erfinder: Warkentin, Waldemar, 32549 Bad Oeynhausen (DE)
(86) Internationale Anmeldenummer: PCT/EP2009/058985
(87) Internationale Veröffentlichungsnummer: WO 2010/010006

(56) Entgegenhaltungen:
- DE-U1- 9 114 426
- US-A- 5 494 002
- US-A- 6 003 474
- US-A1- 2002 005 175

## Beschreibung

Die Erfindung betrifft eine Tierführeinrichtung, mit einem am Körper des Tieres anlegbaren Körperteil und einer daran festlegbaren Leine.

Die in Rede stehende Tierführeinrichtung ist für Tiere, insbesondere Hunde ausgelegt. Eine solche Tierführeinrichtung wird allgemein auch als Führleine bezeichnet. Sofern die Tierführeinrichtung für Haustiere verwendet wird, wird sie allgemein als Hundeleine bezeichnet. Die in Rede stehende Tierführeinrichtung ist jedoch nicht nur für Haustiere verwendbar, sondern auch für Großtiere, beispielsweise für Pferde, Rinder, Ballen und dergleichen. Das am Körper des Tieres anlegbar Körperteil kann ein Halsband, ein Geschirr oder bei Großtieren ein Kopfstück sein. Die daran festlegbare Leine kann fest mit dem Körperteil oder lösbar verbunden sein. Das andere Ende der Leine kann beispielsweise eine Schlaufe sein, um die Leine sicher zu halten.

Es ist allgemein bekannt, dass insbesondere Hunde dazu neigen, dass sie schneller laufen möchten als die das Tier führende Person geht, läuft oder mit einem Zweirad fährt. Dadurch werden auf die das Tier führende Person unangenehm wirkende Kräfte über die Leine übertragen. Eine Tierführeinrichtung ist aus Dokument US-A-6003474 bekannt. Der Erfindung liegt die Aufgabe zugrunde, eine Tierführeinrichtung der eingangs näher beschriebenen Art so zu gestalten, dass für die das Tier führende Person diese Führung erleichtert oder angenehmer wird. Diese Aufgabe wird durch die Merkmale des Anspruchs 1 gelöst. Die gestellte Aufgabe wird durch eine Kraftmesseinrichtung zur Aktivierung eines Signalerzeugers gelöst. Bevorzugt ist an eine Tierführeinrichtung für Haustiere gedacht.

Die Kraftmesseinrichtung ermittelt jeweils die von dem Tier auf die Tierführeinrichtung ausgeübte Zugkraft. Wird ein bestimmter Wert überschritten, wird der Signalerzeuger aktiviert, so dass bei einer entsprechenden Ausbildung des Tieres eine Reaktion in der Form erfolgt, dass die Geschwindigkeit herabgesetzt wird, wodurch auch die Zugkraft vermindert wird.

Die Kraftmesseinrichtung kann vielfältig ausgelegt sein. So ist beispielsweise vorgesehen, dass sie als eine die Zugkraft registrierende Messdose ausgebildet ist. Diese Messdose kann auf elektronischer Basis funktionieren, wobei dann eine Spannungsquelle, beispielsweise in Form einer Batterie oder eines Akkus notwendig ist. Sie kann jedoch auch eine rein mechanische Messeinrichtung sein, vorzugsweise in Form einer Zugfeder, die sich mit erhöhender Zugkraft verlängert, wobei bei einer bestimmten Länge der Signalerzeuger aktiviert wird. Es wäre dann denkbar, dass der Signalerzeuger innerhalb der Zugfeder angeordnet ist. Die Kraftmesseinrichtung kann auch ein Dehnungsmess-Streifen sein.

Der Signalerzeuger ist so ausgelegt, dass für Tiere wahrnehmbare akustische Wellen erzeugt werden, die jedoch für die die Tiere führenden Personen nicht wahrnehmbar sind. Es ist jedoch auch möglich, dass Töne erzeugt werden, die für die Tiere und für Menschen wahrnehmbar sind.

Es ist erfindungsgemäß vorgesehen, dass der Signalerzeuger ein Ultraschallwellen erzeugender Generator und/oder ein Tonerzeuger ist.

In einer alternativen Ausführung ist vorgesehen, dass die Kraftmesseinrichtung in Wirkverbindung mit einer Sprüheinrichtung steht. Diese Sprüheinrichtung könnte ein Spray sein, welches das Verhalten des Tieres beeinflusst. Es sollte jedoch ungefährlich sein, bevorzugt ist an die Verwendung eines Citrussprays gedacht. Die Anordnung der Kraftmesseinrichtung und des Signalerzeuger innerhalb der Tierführeinrichtung kann vielfältig sein. So ist noch vorgesehen, dass die Leine mit der Kraftmesseinrichtung ausgestattet ist und dass das Körperteil den Signal- oder Tonerzeuger aufweist. So könnte die Kraftmesseinrichtung beispielsweise am Karabinerhaken der Leine oder dem D-Ring des Halsbandes angeordnet sein. Auch die Umkehrung ist denkbar, d.h., die Leine ist mit dem Signal- oder Tonerzeuger ausgestattet und das Körperteil weist Kraftmesseinrichtungen auf. Es ist ferner denkbar, dass die Kraftmesseinrichtung und der Signalerzeuger bzw. der Tonerzeuger voneinander getrennt sind und als Adapterteil gestaltet ist. Ein solches Adapterteil lässt sich einfach montieren und befestigen. Damit für den Benutzer die Handhabung äußerst einfach ist, ist in weiterer Ausgestaltung noch vorgesehen, dass die Kraftmesseinrichtung und der Signalerzeuger eine Baueinheit bilden, die entweder aneinander gereiht oder in einem gemeinsamen Gehäuse montiert sind. Bei einer zuvor genannten Ausführung ist es dann denkbar, dass die Kraftmesseinrichtung und der Signalerzeuger als Nachrüstsatz ausgelegt sind, so dass vorhandene Leinen damit nachgerüstet werden können. Es ist dann vorteilhaft, wenn die Baueinheit bzw. das Gehäuse an den einander gegenüberliegenden Seiten mit Einhängeelementen versehen ist, die vorzugsweise als Karabinerhaken ausgebildet sind. Erfindungsgemäß ist noch dass die Frequenz der von dem Signalerzeuger erzeugten Ultraschallwellen bzw. die Lautstärke der Töne mittels einer Regeleinrichtung veränderbar ist. Dadurch ergibt sich die Möglichkeit, dass die Ultraschallsignale auf das Verhalten des Hundes abgestellt werden können.

Diese Regeleinrichtung kann verschiedenartig ausgestaltet sein. So ist vorgesehen, dass diese Regeleinrichtung als separates Bauelement ausgebildet ist, oder in die Leine oder in das Körperteil integriert ist. Vorzugsweise ist jedoch vorgesehen, dass es ein separates Bauelement ist oder in die Leine integriert ist. Sofern es sich um ein separates Bauelement handelt, kann dies im Sinne einer Fernbedienung von der den Hund führenden Person betätigt werden. Sofern es in die Leine integriert ist, kann dies an einer solchen Stelle erfolgen, dass die den Hund führende Person die Regeleinrichtung betätigen kann. Alternativ ist es jedoch auch möglich, dass die Regeleinrichtung durch die jeweilige vom Hund aufgebrachte Zugkraft geregelt wird. Dabei könnte das Gerät in Abhängigkeit von der Größe und/oder Stärke eines Hundes in eine Grundeinstellung gebracht werden, so dass dann die Frequenz bzw. die Höhe der Töne verändert wird.

Sofern die Regeleinrichtung manuell betätigt wird, ist vorgesehen, dass diese mit einem Stellglied zur Veränderung der Lautstärke, vorzugsweise in Form eines Einstellrädchens, eines Schiebeschalters, eines Mikroschalters oder dergleichen ausgerüstet ist.

Insbesondere bei einer manuelle Betätigung der Regeleinrichtung ist es vorteilhaft, wenn diese mit einer optischen Anzeige, vorzugsweise in Form von mehreren Leuchtdioden zur Anzeige der jeweiligen Lautstärke bzw. der Frequenz ausgerüstet ist. Diese Anzeige könnte dann so ausgelegt sein, dass mit zunehmender Zugkraft die Anzahl der leuchtenden Leuchtdioden erhöht wird.

Es ist ferner vorgesehen, dass die die Regeleinrichtung bildenden Bauteile in einem Gehäuse installiert sind. Dieses Gehäuse ist vorzugsweise aus zwei Gehäuseschalen oder aus einem kastenartigen Gehäuseteil und einem Deckel gebildet.

Bei einer manuellen Betätigung der Regeleinrichtung ist noch in weiterer Ausgestaltung vorgesehen, dass das Gehäuse an den einander gegenüberliegenden Schmalseiten mit zwei Einhängeelementen, vorzugsweise in Form von Ösen ausgestattet ist. Diese Ösen gestatten es, dass die Regeleinrichtung in die Hand genommen werden kann, dass sie jedoch auch bei entsprechenden Gegenstücken in die Leine integriert werden kann.

In einer weiteren Ausführung ist noch vorgesehen, dass an der Leine oder am Körperteil eine Einhängevorrichtung derart vorgesehen ist, dass durch eine mechanische Umlegung der Zugkraft eine vorzugsweise an der aus dem Signalerzeuger und der Kraftmesseinrichtung gebildeten Baueinheit angeordneter Auslöser aktivierbar ist.

Es ist nicht notwendig, dass die Kraftmesseinrichtung und der Signalerzeuger in Verbindung mit der Leine und dem Körperteil stehen, sondern dass die aus dem Signalgeber und der Kraftmesseinrichtung gebildete Baueinheit oder auch jeweils einzeln zur Führung des Tieres verwendet wird. Dies gilt insbesondere zur Erziehung eines Tieres.

Anhand der beiliegenden Zeichnung wird die Erfindung noch näher erläutert.

Es zeigt:
- Figur 1: eine mittels der erfindungsgemäßen Tierführeinrichtung einen Hund führende Person
- Figur 2: die Regeleinrichtung in einer Draufsicht.

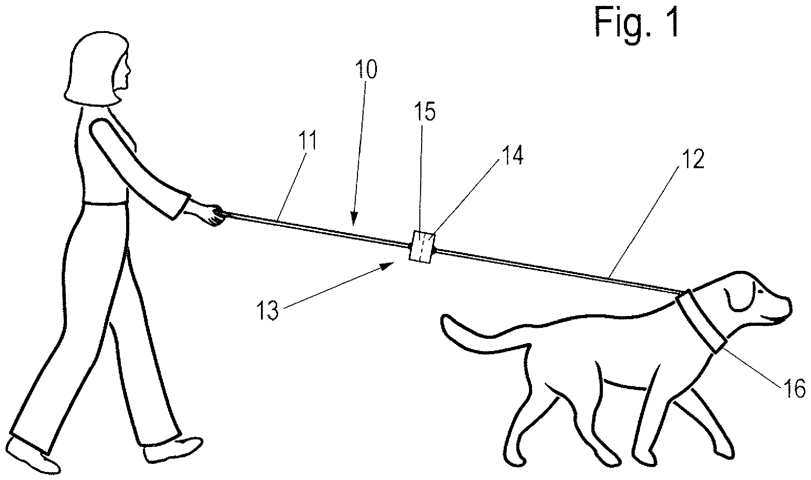

In der Figur 1 soll dargestellt werden, dass eine Person mittels der erfindungsgemäßen Tierführeinrichtung 10 einen Hund ausführt. Diese Tierführeinrichtung 10 besteht im dargestellten Ausführungsbeispiel aus einer Hundeleine, die aus zwei Teilstücken 11, 12 gebildet ist. Die Verbindung der beiden Teilstück 11, 12 erfolgt über eine Baueinheit 13, die aus einer nicht näher erläuterten Kraftmesseinrichtung 14 und einem Signalerzeuger 15 besteht.

Die Kraftmesseinrichtung 14 erzeugt beim Überschreiten einer bestimmten Zugkraft ein Signal, um den Signalerzeuger 15 zu aktivieren. Es ist jedoch alternativ auch möglich, dass durch die Kraftmesseinrichtung 14 der Signalerzeuger 15 geschaltet wird. Die von dem Signalerzeuger 15 abgegebenen Wellen liegen vorzugsweise in einem Frequenzbereich, der für Tiere noch wahrnehmbar, jedoch für Menschen nicht mehr wahrnehmbar ist. Diese Frequenzen liegen im Ultraschallbereich.

Im dargestellten Ausführungsbeispiel ist die aus den Teilstücken 11, 12 gebildete Hundeleine an einem Halsband 16 angebunden. Entgegen dieser Darstellung könnte statt des Halsbandes 16 auch ein als Geschirr oder Kopfstück ausgebildetes Körperteil verwendet werden. Bei einer entsprechenden Ausbildung des Tieres oder aber durch Gewohnheit wird das Tier die Zugkraft herabsetzen, wenn es die Ultraschallwellen wahrnimmt.

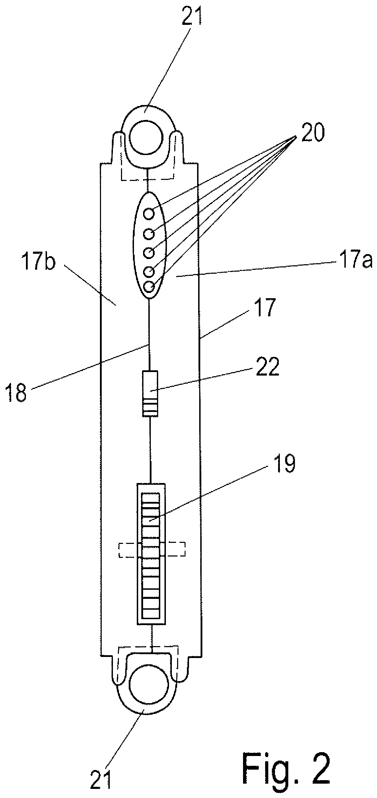

Die Figur 2 zeigt die Regeleinrichtung in einer Draufsicht zur Regelung der Höhe der Frequenz des Signalerzeugers bzw. über die Tonhöhe der Signale. In einem Gehäuse 17 sind die die Regeleinrichtung bildenden Bauteile installiert. Das Gehäuse besteht aus den beiden Gehäuseschalen 17a und 17b, wie durch die Trennfuge 18 angedeutet ist. In dem Gehäuse 17 sind die an sich bekannten Bauteile der Regeleinrichtung installiert. Die gegenseitige Zuordnung und auf die Beschreibung dieser Bauteile wird verzichtet, da sie zum allgemeinen Stand der Technik gehören. Wie die Figur 2 zeigt, ist mittig ein Stellglied 19 installiert, um die Höhe der Frequenzen bzw. die Tonhöhe der Signale zu beeinflussen. Im dargestellten Ausführungsbeispiel ist dieses Stellglied ein Einstellrädchen, welches umfangsseitig gerändelt ist. In nicht dargestellter Weise kann das Stellglied ein Schiebeschalter, ein Mikroschalter oder ein sonstiges in der Regeltechnik verwendetes Stellglied sein. Um die Höhe der Frequenzen bzw. die Tonhöhe der Signale für den Benutzer sichtbar zu machen, ist in das Gehäuse 17 eine Reihe von Leuchtdioden 20 installiert. Die Anzahl der leuchtenden Leuchtdioden 20 erfolgt in Abhängigkeit von der Höhe der Frequenz bzw. der Tonhöhe der Signale. Das Gehäuse 17 ist zur optimalen Handhabung viereckig oder rund oder oval, wobei die Länge deutlich größer ist als die Breite. An den beiden Schmalseiten sind gegenüberliegend jeweils ein Einhingeelement in Form einer Öse 21 installiert. Diese Ösen stören nicht, wenn die den Hund führende Person die Regeleinrichtung in die Hand nimmt, es besteht jedoch auch die Möglichkeit, dass die Regeleinrichtung in die Leine integriert wird. In das Gehäuse 17 ist ferner noch ein Schalter 22 installiert, um die Regeleinrichtung ein- und auszuschalten.

Die Erfindung ist nicht auf das dargestellte Ausführungsbeispiel beschränkt. Wesentlich ist, dass beim Überschreiten einer bestimmten auf die Tierführeinrichtung 10 einwirkenden Zugkraft Signale erzeugt werden, die zumindest für das Tier wahrnehmbar, für die das Tier führende Person jedoch vorzugsweise nicht wahrnehmbar sind.

## Patentansprüche

1. Tierführeinrichtung (10), mit einem am Körper des Tieres anlegbaren Körperteil (16) und einer daran festlegbaren Leine (11, 12) sowie einer Kraftmesseinrichtung (14) zur Aktivierung eines als ein Ultraschallwellen erzeugender Generator und/oder als Tonerzeuger ausgebildeten Signalerzeugers (15), **dadurch gekennzeichnet, dass** die Frequenz und/oder die Lautstärke der von dem Signalerzeuger (15) erzeugten Ultraschallwellen bzw. der Signale mittels einer Regeleinrichtung veränderbar ist.

2. Tierführeinrichtung nach Anspruch 1, **dadurch gekennzeichnet, dass** die Kraftmesseinrichtung (14) eine eine Zugkraft registrierende Messdose ist.

3. Tierführeinrichtung nach Anspruch 1, **dadurch gekennzeichnet, dass** die Kraftmesseinrichtung (14) eine Zugfeder oder ein Dehnungsmessstreifen ist.

4. Tierführeinrichtung nach Anspruch 1, **dadurch gekennzeichnet, dass** die Kraftmesseinrichtung (14) in Wirkverbindung mit einer Sprüheinrichtung steht.

5. Tierführeinrichtung nach einem oder mehreren der vorstehenden Ansprüche, **dadurch gekennzeichnet, dass** die Leine (11, 12) mit der Kraftmesseinrichtung (14) ausgestattet ist und dass das Körperteil (16) den Signal- oder Tonerzeuger (15) aufweist.

6. Tierführeinrichtung nach einem oder mehreren der vorstehenden Ansprüche, **dadurch gekennzeichnet, dass** die Leine (11, 12) mit dem Signal- oder Tonerzeuger (15) und dass das Körperteil (16) mit der Kraftmesseinrichtung (14) ausgestattet ist.

7. Tierführeinrichtung nach einem oder mehreren der vorstehenden Ansprüche, **dadurch gekennzeichnet, dass** die Kraftmesseinrichtung (14) und der Signal- oder Tonerzeuger (15) voneinander getrennt und als Adapterteil ausgebildet sind.

8. Tierführeinrichtung nach einem oder mehreren der vorstehenden Ansprüche, **dadurch gekennzeichnet, dass** aus der Kraftmesseinrichtung (14) und dem Signalerzeuger (15) eine als Nachrüstsatz auslegbare Baueinheit gebildet ist, und dass der Nachrüstsatz an den einander gegenüberliegenden Seiten mit Einhängeelementen, vorzugsweise in Form von Karabinerhaken ausgestattet ist.

9. Tierführeinrichtung nach einem oder mehreren der vorstehenden Ansprüche, **dadurch gekennzeichnet, dass** die Regeleinrichtung als separates Bauelement ausgebildet oder in die Leine (11, 12) oder in das Körperteil (16) integriert ist, und die mit einem Stellglied zur Veränderung der Lautstärke, vorzugsweise in Form eines Einstellrädchens (19) eines Schiebeelementes, eines Mikroschalters oder dergleichen ausgestattet ist, oder dass die Regeleinrichtung mit einer optischen Anzeige, vorzugsweise in Form von mehreren Leuchtdioden (20) zur Anzeige der jeweiligen Lautstärke ausgerüstet ist.

10. Tierführeinrichtung nach einem oder mehreren der vorstehenden Ansprüche, **dadurch gekennzeichnet, dass** die Regeleinrichtung zugkraftabhängig selbsttätigend regelbar ist.

11. Tierführeinrichtung nach Anspruch 10, **dadurch gekennzeichnet, dass** abhängig von der Zugkraft die Schallfrequenz der Ultraschallwellen bzw. der Tonsignale veränderbar ist.

12. Tierführeinrichtung nach Anspruch 10 oder 11, **dadurch gekennzeichnet, dass** abhängig von der Zugkraft die Lautstärke der Ultraschallwellen bzw. der Tonsignale veränderbar ist.

13. Tierführeinrichtung nach einem oder mehreren der vorstehenden Ansprüche, **dadurch gekennzeichnet, dass** die die Regeleinrichtung bildenden Bauteile in einem Gehäuse (17) angeordnet sind, welches vorzugsweise aus zwei Gehäuseschalen (17a, 17b) gebildet ist, und dass das Gehäuse (17) an den einander gegenüberliegenden Schmalseiten mit jeweils einem Einhängeelement, vorzugsweise in Form einer Öse (21) ausgestattet ist.

14. Tierführeinrichtung nach einem oder mehreren der vorstehenden Ansprüche, **dadurch gekennzeichnet, dass** an der Leine (11) oder am Körperteil (16) eine Einhängevorrichtung derart vorgesehen ist, dass durch eine mechanische Umlegung der Zugkraft ein vorzugsweise an der aus dem Signalerzeuger (15) und der Kraftmesseinrichtung (14) gebildeten Baueinheit angeordneter Auslöser aktivierbar ist.

15. Tierführeinrichtung nach einem oder mehreren der vorstehenden Ansprüche, **gekennzeichnet durch** die Verwendung der Kraftmesseinrichtung (14) und des Signalerzeuger (15) als Baueinheit oder jeweils einzeln zur Führung des Tieres.

## Claims

1. An animal guiding device (10) with one part that can be placed on the body of the animal (16) and an attached cord (11,12), as well as a force measuring device, (14) to activate a generator that produces an ultrasonic wave and/or a sound signal (15) **characterized in that** the frequency and/or the volume of the ultrasonic waves, (15) or the signals created by the generator, can each be regulated with a control device.

2. Animal guiding device according to claim 1, **characterized in that** the force measuring device (14) is a load cell which registers tensile force.

3. Animal guiding device according to claim 1, **characterized in that** the force measuring device (14) is a tension spring or a strain gauge.

4. Animal guiding device according to claim 1, **characterized in that** the force measuring device (14) operates in conjunction with a spraying device.

5. Animal guiding device according to one or more of the preceding claims, **characterized in that** the leash (11,12) is equipped with the force measuring device (14) and the body part (16) contains the signal or sound generator (15).

6. Animal guiding device according to one or more of the preceding claims, **characterized in that** the leash (11,12) is equipped with the signal or sound generator (15) and the body part (16) is equipped with the force measuring device (14).

7. Animal guiding device according to one or more of the preceding claims, **characterized in that** the force measuring device (14) and the signal or sound generator (15) and separated from one another and are designed as an adaptor component.

8. An animal guiding device according to one or more of the preceding claims, **characterized in that** out of the force measuring device (14) and the signal generator (15) is a retrofit kit construed composed as assembly part, and wherein the retrofitted set is equipped with suspension elements, preferably in the form of carabineer hooks on opposite sides.

9. Animal guiding device according to one or more of the preceding claims, **characterized in that** a regulating device that is either a separate structural element or is integrated into the cord (11, 12) or integrated into the piece on the body (16) and has a (19) sliding element, e.g., a micro switch or equivalent. Or, the control device is equipped with an optical display with indicators, preferably in the form of light-emitting diodes (20), for showing the volume level provided.

10. Animal guiding device according to one or more of the preceding claims, **characterized in that** the force measuring device (14) and the signal generator (15) are used as a single structural unit or individually to guide the animal.

11. An animal guiding device according to claim 1, is **characterized in that** the frequency of the ultrasonic waves or the sound signals can be varied as a function of the tensile force.

12. An animal guiding device according to claim 10 or 11, is **characterized in that** the volume of the ultrasonic waves or the sound signals can be varied as a function of the tensile force.

13. An animal guiding device to one or more of the preceding claims, **characterized in that** the components forming the regulating device are arranged in a casing (17), which is preferably formed from two casing shells (17a, 17b), and that the casing that joins the narrow sides that lay opposite one another is fitted with a suspension element, preferably in the form of an eyelet (21).

14. Animal guiding device according to one or more of the preceding claims, **characterized in that** the leash (11) or the body part (16) is equipped with a hanging device of a type which may be activated via mechanical apportionment of the tensile force by an actuator preferably aligned to the single structural unit formed by the signal generator (15) and the force measuring device (14).

15. Animal guiding device according to one or more of the preceding claims, **characterized in that** the force measuring device (14) and the signal generator (15) are used as a single structural unit or individually to guide the animal.

## Revendications

1. Dispositif de guidage d'animal (10), avec une partie corporelle pouvant être posée sur le corps de l'animal (16) et une laisse pouvant y être fixée (11,12) ainsi qu'un dispositif de mesure de force (14) pour l'activation d'un générateur de signal (15) conçu comme un générateur d'ondes ultrasonores et/ou un générateur de son **caractérisé en ce que** la fréquence et/ou le volume sonore généré par les ondes ultrasonores du générateur de signal ou des signaux sont modifiables à l'aide d'un dispositif de réglage.

2. Dispositif de guidage d'animal d'après la revendication 1, **caractérisé en ce que** le dispositif de mesure de force (14) est une capsule dynamométrique d'enregistrement de la force de traction.

3. Dispositif de guidage d'animal d'après la revendication 1, **caractérisé en ce que** le dispositif de mesure de force (14) est un ressort de traction ou une jauge extensométrique.

4. Dispositif de guidage d'animal d'après la revendication 1, **caractérisé en ce que** le dispositif de mesure de force (14) est en liaison d'actionnement avec un pulvérisateur.

5. Dispositif de guidage d'animal d'après une ou plusieurs revendications précitées, **caractérisé en ce que** la laisse (11, 12) est équipée d'un dispositif de mesure de force (14) et que la partie corporelle possède un générateur de son (15).

6. Dispositif de guidage d'animal d'après une ou plusieurs revendications précitées, **caractérisé en ce que** la laisse (11, 12) est équipée d'un générateur de signal ou de son (15) et que la partie corporelle est équipée d'un dispositif de mesure de force (14).

7. Dispositif de dressage d'animal d'après une ou plusieurs revendications précitées, **caractérisé en ce que** le dispositif de mesure de force (14) et le générateur de signal ou de son (15) sont séparés et conçus comme éléments d'adaptation.

8. Dispositif de guidage d'animal d'après une ou plusieurs revendications précitées **caractérisé en ce que** le dispositif de mesure de force (14) et le générateur de signal (15) forment une unité modulaire conçue en tant que complément d'équipement et que le complément d'équipement est équipé sur les côtés opposés d'éléments d'accrochage de préférence sous forme de mousquetons.

9. Dispositif de guidage d'animal d'après une ou plusieurs revendications précitées, **caractérisé en ce que** le dispositif de réglage est conçu en tant que composant séparé ou est intégré dans la laisse (11, 12) ou dans la partie corporelle (16) et est équipé d'un organe de réglage pour modifier le volume sonore de préférence sous forme d'une roulette de réglage (19), d'un élément coulissant, d'un micro-interrupteur ou d'un dispositif équivalent ou que le dispositif de réglage est équipé d'un témoin visuel, de préférence sous forme de plusieurs diodes lumineuses (20) pour la visualisation des différents volumes sonores.

10. Dispositif de guidage d'animal d'après une ou plusieurs revendications précitées, **caractérisé en ce que** le dispositif de réglage est réglable automatiquement d'après la force de traction.

11. Dispositif de guidage d'animal d'après la revendication 10 **caractérisé en ce que** la fréquence des ondes ultrasonores ou le signal sonore dépendant de la force de traction est modifiable.

12. Dispositif de guidage d'animal d'après les revendications 10 ou 11, **caractérisé en ce que** le volume des ondes ultrasonores ou le signal sonore dépendant de la force de traction est modifiable.

13. Dispositif de guidage d'animal d'après une ou plusieurs revendications précitées, **caractérisé en ce que** les composants formant le dispositif de réglage sont placés dans un boîtier (17) formé de préférence de deux coquilles de boîtier (17 a, 17 b) et que le boîtier (17) est équipé sur chacun des côtés étroits opposés d'un élément d'accrochage de préférence sous forme d'un anneau (21).

14. Dispositif de guidage d'animal d'après une ou plusieurs revendications précitées, **caractérisé en ce qu'un** dispositif d'accrochage à la laisse (11) ou à la partie corporelle (16) est prévu de telle sorte qu'un déclencheur de préférence rattaché à l'unité modulaire formée du générateur de signal (15) et du dispositif de mesure de force (14) peut être activé par un transfert mécanique de la force de traction.

15. Dispositif de guidage d'animal d'après une ou plusieurs revendications précitées, **caractérisé par** l'utilisation du dispositif de mesure de force (14) et du générateur de signal (15) en tant qu'unité modulaire ou individuellement pour la conduite de l'animal.
